# EUROPÄISCHE PATENTSCHRIFT

(11) **EP 1 618 030 B1**
(45) Veröffentlichungstag und Bekanntmachung des Hinweises auf die Patenterteilung: **04.10.2006**
(21) Anmeldenummer: 04725929.6
(22) Anmeldetag: 06.04.2004
(51) Int. Cl.: B62D 5/04

(54) **HILFSKRAFTLENKUNG MIT ELEKTROMOTORSPERRE**
POWER STEERING GEAR WITH ELECTRIC MOTOR LOCKING DEVICE
DIRECTION ASSISTEE POURVUE D'UN SYSTEME DE VERROUILLAGE DE MOTEUR ELECTRIQUE

(30) Priorität: 07.04.2003 DE 10315704
(43) Veröffentlichungstag der Anmeldung: 25.01.2006
(73) Patentinhaber: ZF Lenksysteme GmbH, 73527 Schwäbisch Gmünd (DE)
(72) Erfinder: KÜHNHÖFER, Thomas, 73540 Heubach (DE); BIEGERT, Rainer, 89558 Böhmenkirch (DE)
(86) Internationale Anmeldenummer: PCT/EP2004/003636
(87) Internationale Veröffentlichungsnummer: WO 2004/089724

(56) Entgegenhaltungen:
- US-A- 6 164 150

## Beschreibung

Die Erfindung betrifft eine Hilfskraftlenkung mit einem Elektromotor und einem davon angesteuerten Überlagerungsgetriebe, das dem durch die Lenkhandhabe vorgegebenen Lenkwinkel einen Korrekturwinkel überlagert. In solchen Hilfskraftlenkungen ist die Übersetzung des Lenkgetriebes keine feste Größe, sondern kann abhängig von verschiedenen Parametern, etwa von der Fahrzeuggeschwindigkeit, variabel eingestellt und an die auftretende Fahrsituation angepasst werden. US-A-6 164 150 offenbart eine Hilfskraftlenkung nach dem Oberbegriff in Anspruch 1.

Aus der DE-A1-19601826 ist eine weitere Hilfskraftlenkung bekannt Dort wird eine Lenkung beschrieben, die einen Elektromotor und ein davon angesteuertes Überlagerungsgetriebe aufweist, das einem an der Lenkhandhabe eines Fahrzeugs vorgegebenen Lenkwinkel einen Korrekturwinkel überlagert. Der vom Fahrer bewirkten Drehbewegung wird also eine helfende Drehbewegung überlagert. Dazu ist der Rotor des Elektromotors mit einem mechanischen Getriebeteil des Überlagerungsgetriebes, z.B. einem Schneckenrad oder einem Schraubrad, verbunden, über das die vom Elektromotor erzeugte und der manuellen Drehbewegung zu überlagernde Bewegung in die Lenkung eingespeist wird. Das Ausmaß der Überlagerung hängt beispielsweise ab von der derzeitigen Fahrzeuggeschwindigkeit. Mit einer solchen Art der Hilfskraftlenkung kann das Übersetzugsverhältnis sehr flexibel variiert werden. Es ist z.B. sehr hilfreich, wenn die Übersetzung während der Schnellfahrt des Fahrzeuges kleiner ist als während der Langsamfahrt oder des Einparkens des Fahrzeuges. Auch wenn die Unterstützung, etwa durch Versagen des Elektromotors oder seiner elektronischen Steuerung, ausfallen sollte, entsteht dennoch keine gefährliche Situation für den Fahrzeugführer, da er das Fahrzeug grundsätzlich auch ohne Hilfsunterstützung lenken kann.

Jedoch können im Elektromotor selbst oder in seiner elektronischen Steuerung Fehler oder Fehlfunktionen nicht ausgeschlossen werden, die eine unbeabsichtigte Motorbewegung verursachen und damit ein unbeabsichtigtes Eingreifen der Lenkunterstützung. Das wiederum kann zu sehr unangenehmen oder sogar riskanten Situationen für Fahrer und Fahrzeug führen.

In der DE-A1-10000219 wird eine Hilfskraftlenkung mit einem verbesserten Überlagerungsgetriebe vorgeschlagen, das u.a. ein "selbsthemmend ausgebildetes Schneckengetriebe" aufweist (siehe dort Spalte 2, Zeilen 18 bis 30 sowie Anspruch 13). Dort wird diese Konstruktion zur Verringerung der Spiels der ineinander greifenden Getriebeteile verwendet. Dass ein solches selbsthemmend ausgebildetes Getriebe auch helfen kann, das eingangs genannte Problem zu verringern, nämlich den riskanten Auswirkungen durch die in der Steuerung auftretenden Fehler oder Fehlfunktionen entgegenzuwirken, wird allerdings dort nicht beschrieben.

Die Praxis hat gezeigt, dass bei einem (ungewollten oder gewollten) Ausfall des Servomotors trotz Vorhandenseins eines selbsthemmenden Schneckengetriebes eine hohe Unsicherheit beim Lenken eines Fahrzeuges vorhanden ist. Das heißt, es verbleibt ein nicht zu vernachlässigendes restliches Sicherheitsrisiko. Dies gilt im Besonderen bei Schraubradgetrieben oder anderen Getriebearten, die keine Selbsthemmung aufweisen.

Es ist daher Aufgabe der Erfindung, eine Hilfskrafilenkung der eingangs genannten Art mit einer Sicherungsvorrichtung zu versehen, die unabhängig von der verwendeten Getriebeart verhindert, dass unbeabsichtigte Lenkunterstützungen auftreten können.

Gelöst wird die Aufgabe durch eine Hilfskraftlenkung mit den Merkmalen des Anspruchs 1.

Demnach wird der Elektromotor mit einer mechanischen Sperre versehen, die zusätzlich zu einer elektrischen Deaktivierung des Elektromotors wirksam wird und die zumindest in störungsbehafteten Situationen das mechanische Getriebeteil des Überlagerungsgetriebes fixiert und gegen Bewegung sichert, indem das Getriebeteil (z.B. Schnecke, Schneckenrad oder Schraubrad) mit langlochförmigen Nuten versehen ist, in die ein Stift der mechanischen Sperre eingreift.

Vorteilhafte Ausgestaltungen ergeben sich aus den Unteransprüchen.

Die Erfindung wir nun genauer beschrieben anhand eines Ausführungsbeispiels, wobei auf die folgenden schematischen Zeichnungen Bezug genommen wird:
- Fig. 1: zeigt das Überlagerungsgetriebe einer Hilfskratflenkung mit daran angeordnetem Elektromotor mit mechanischer Sperre;
- Fig. 2: zeigt im Detail den Elektromotor (Servomotor) mit elektronischer Steuerung und mechanischer Sperre, bei der ein Sperrstift in langlochförmige Nuten eingreift;
- Fig. 3: zeigt im Schnittbild durch den Servomotor den sich gegenüber dem Stator drehenden Rotor;
- Fig. 4: zeigt bei zunehmender relativer Winkellage zwischen Rotor und Stator zwischen, Null und 90 Grad den sich ergebenden Anstieg des Motordrehmoments.

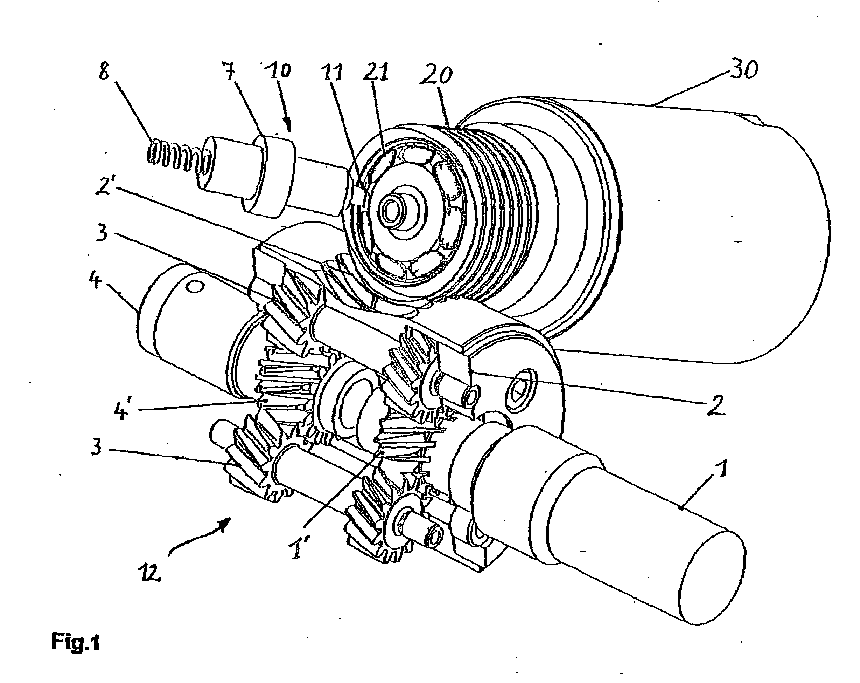

In der Fig. 1 ist schematisch der Aufbau einer erfindungsgemäßen Hilfskraftlenkung dargestellt. Diese umfasst ein Überlagerungsgetriebe 12, welches ein erstes Eingangsgetriebeglied 1 und ein zweites Eingangsgetriebeglied 20 sowie ein Ausgangsgetriebeglied 4 aufweist. Das erste Eingangsgetriebeglied 1 ist an eine (nicht dargestellte) Lenkhandhabe, die üblicherweise ein Handlenkrad ist, koppelbar. Das Ausgangsgetriebeglied 4 ist an ein (nichtdargestelltes) Lenkgetriebe koppelbar, welches in bekannter Weise, also etwa durch hydraulische Unterstützung, eine Lenkbewegung verstärkt an die Fahrzeugräder weiterleitet. Das zweite Eingangsgetriebeglied ist in dem hier gezeigten Beispiel als Schnecke 20 ausgebildet, die an einem Elektromotor 30 gekoppelt ist Der Elektromotor dient als Servomotor, der über die Schnecke 20 auf die Überiagerungswelle 2 des Überlagerungsgetriebes 12 wirkt. Bei der gezeigten Hilfskraftlenkung handelt es sich also um eine Servolenkungsvorrichtung, die es ermöglicht, der vom Handlenkrad ausgelösten Bewegung eine vom Servomotor ausgehende Bewegung zu überlagern. Es kann also zum Drehwinkel des Handlenkrades ein zusätzlicher Drehwinkel addiert oder subtrahiert werden.

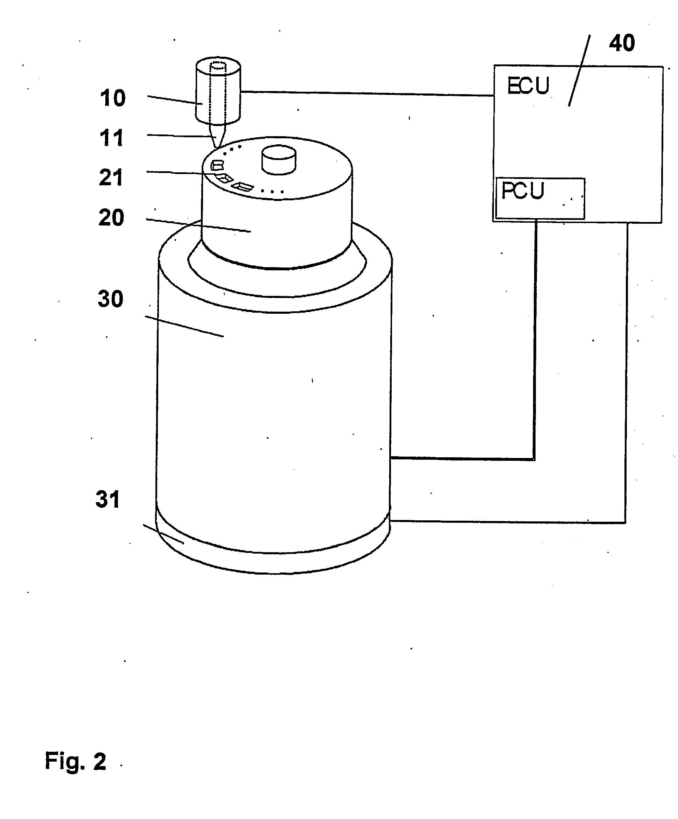

Wenn nun der Servomotor 30 ausfallen sollte oder seine Steuerung (siehe ECU in Fig. 2) fehlerhaft arbeiten sollte, dann wird der Servomotor bewusst abgeschaltet. Zusätzlich dazu wird die mechanische Sperre 10 aktiviert. Wäre dies nicht der Fall, dann könnte die Gefahr bestehen, dass sich das zweite Eingangsgetriebeglied 20 des Überlagerungsgetriebes 12 aufgrund eines fehlenden Gegenhaltemoments unkontrolliert drehen kann. Ein zuverlässiges Lenken wäre in dieser Situation somit nicht mehr möglich.

Die Erfindung beruht auf der Erkenntnis, dass die herkömmlichen Hilfslenkungen, bei denen das Überlagerungsgetriebe lediglich eine Selbsthemmung aufweist, nicht zuverlässig ist. Denn Untersuchungen haben ergeben, dass in den bekannten Vorrichtungen der Selbsthemm-Effekt durch Vibrationen, Schwingungen oder dergleichen aufgehoben wird. Außerdem wären andere Getriebearten, bei denen kaum oder keinerlei Selbsthemmung vorhanden ist, nicht verwendbar.

Mit der erfindungsgemäß zusätzlich angebrachten mechanischen Sperre 10 ist es nun möglich, das zweite Eingangsgetriebeglied 20 des Überlagerungsgetriebes 12 bei einem (gewollten oder ungewollten) Ausfall des Servomotors 30 zuverlässig an einer weiteren Drehbewegung zu hindern. Hierdurch ist nun sichergestellt, dass in der genannten Situation eine mit Hilfe des Handlenkrades eingeleitete Lenkbewegung exakt in das Lenkgetriebe übertragen wird, auch wenn im Fahrzeug Vibrationen auftreten. Die langlochförmigen Nuten 21 haben den Vorteil, dass keine allzu genaue Positionierung des Sperrenstift 11 erforderlich ist. Es werden also Montagetoleranzen aufgefangen. Auch wird die Geräuschentwicklung reduziert, weil es sehr unwahrscheinlich ist, dass der Sperrenstift 11 vor dem Einrasten in eine der Nuten 21 zunächst auf einen der Zwischenstege auftrifft und somit ein unangenehmes Klackgeräusch erzeugt.

Gleichfalls gilt, dass die Sperre 10 auch dann sofort wirkt, wenn die Winkellage des Rotors und damit die Winkellage des Eingangsgetriebeglieds, also in diesem Beispiel die Winkellage der Getriebeschnecke 20, nicht ideal fluchtet mit der Position des Sperrenstiftes 11. Die als Langlöcher ausgebildeten Nuten 21 erfüllen dennoch eine sichere mechanische Sperrung des Servomotors 30. Die Länge der Nuten 21 ist vorzugsweise so dimensioniert, dass sie die Verdrehung auf die maximal zulässige Winkeltoleranz von beispielsweise 10 Grad begrenzen. Bei einem Übersetzungverhältnis des Schneckengetriebes von z.B. 1:40 würde also die im Sperrzustand noch tolerierte Winkelüberlagerung maximal 0,25 Grad betragen.

Die in Figur 1 dargestellte Hilfskraftlenkung wird nun noch näher beschrieben:

Zu dem mit 12 bezeichneten Überlagerungsgetriebe gehört das erste Eingangsgetriebeglied 1, das zweite Eingangsgetriebeglied 20 und das Ausgangsgetriebeglied 4. Das erste Eingangsgetriebeglied 1 wird im Fahrzeug an ein in Fig. 1 nicht dargestelltes Handlenkrad gekoppelt. Das zweite Eingangsgetriebeglied 20 wird mittels des Servomotors 30 angetrieben. In diesem Beispiel ist der gezeigte Servomotor vorzugsweise als stufenlos regulierbarer Elektromotor 30 ausgebildet Das Ausgangsgetriebeglied 4 wird im Fahrzeug an ein in Figur 1 nicht dargestelltes Lenkgetriebe gekoppelt.

Das erste Eingangsgetriebeglied 1 ist als eine Eingangswelle mit einem Sonnenrad 1' ausgebildet. Das Ausgangsgetriebeglied 4 ist als Ausgangswelle mit einem Sonnenrad 4' ausgebildet. Beide Sonnenräder 1' und 4' kämmen mit einer gewissen Anzahl von Stufenplaneten 3, die in einem Planetenträger 2 drehbar gelagert sind. Die Sonnenräder 1' und 4' sowie die Planetenräder 3 sind als schrägverzahnte Stimräder ausgebildet. Der Planetenträger 2 ist mit einer Außenverzahnung 2' versehen; dieser steht in Eingriff mit der Schnecke 20, die hier das zweite Eingangsgetriebeglied bildet. Die Schnecke 20 ist unmittelbar durch den Servomotor 30 antreibbar. Die Elemente 20 und 2 bilden also ein Schneckengetriebe. Alternativ dazu können auch andere Getriebearten, insbesondere Schraubradgetriebe oder auch Hypoidradgetriebe (Kegelradgetriebe), eingesetzt werden.

Als wesentliche Neuerung ist dem zweiten Eingangsgetriebeglied 20 eine insgesamt mit 10 bezeichnete mechanische Sperre zugeordnet Hierzu ist im einzelnen folgendes vorgesehen:

Das Schraubrad 20 hat einen Kranz von stirnseitigen Aussparungen, die als langlochförmige Nuten 21 ausgebildet sind. In eine dieser Nuten 21 kann unter der Wirkung einer Feder 8 ein Stift 11 eingreifen. An diesem Eingreifen wird der Stift 11 normalerweise - bei aktivem Servomotor 30 - mittels eines Haltemagneten 7 entgegen der Kraft der Feder 8 gehindert. Sobald jedoch der Servomotor ausfällt oder absichtlich deaktiviert wird, d.h. sobald der Elektromotor 30 stromlos wird, wird auch der Haltemagnet 7 stromlos geschaltet, so dass die Feder 8 in kürzester Zeit den Sperrstift 11 in eine der Nuten 21 hineindrückt. Hierdurch wird die Schnecke 20 und somit indirekt auch der Planetenträger 2 an einer weiteren Drehbewegung gehindert. Nach wie vor überträgt das erste Eingangsgetriebeglied 1 eine Drehbewegung des Lenkrads über die Stufenplaneten 3 auf das Ausgangsgetriebeglied 4. Nunmehr stehen aber die übertragenen Drehwinkel und Drehmomente in einem festen Übersetzungsverhältnis, nämlich der sogenannten Standübersetzung des Überlagerungsgetriebes 12.

Somit ist in dieser Situation ein zuverlässiges Lenken des Fahrzeuges mit voller Sicherheit möglich. Lediglich auf die Unterstützung des Lenkvorgangs mit Hilfe des Servomotors muss in dieser Situation verzichtet werden.

Falls -trotz der vorgesehenen Langloch-Nuten 21, der Sperrstift 11 beim Einrücken und/oder beim Ausrücken allzu oft auf einen Verbindungssteg auftrifft und somit ein unangenehmes Geräusch verursacht, kann eine Zusatzeinrichtung zur Geräuschdämpfung vorgesehen werden, z.B. nach Art eines hydraulischen Stoßdämpfers. Alternativ kann die Zusatzeinrichtung dadurch realisiert werden, dass der Sperrenstift und der Anker des Magneten getrennte Bauteile bilden, zwischen denen ein nachgiebiges Zwischenglied, z.B. eine Dämpfungsfeder, vorgesehen ist.

Das hier beschriebene Beispiel ist im Bereich der sogenannten AFS (Active Front Steering) Lenkung, kurz auch AS (Active Steering) genannt, angesiedelt Bei dem Elektromotor 30 handelt es sich um einen umrichtergespeisten bürstenlosen Gleichstrommotor, der über eine Sperre 10 blockiert werden kann. Die Sperrwirkung ist so groß, dass der Motor 30 im Stillstand auch bei Abgabe seines Maximalmoments (Md = Mdmax, siehe Fig. 2) festgehalten werden kann. Es handelt es sich hier also um eine Sperre im eigentlichen Sinn, also weniger um eine Bremse oder dergleichen. Die beschriebene Sperre sowie auch die später noch beschriebene FunktionsDiagnose können für verschiedene Motorarten, z.B. für Asynchronmotoren oder Gleichstrombürstenmotoren, verwendet werden.

In der Fig. 2 sind der Elektromotor 30 und die Sperre 10 noch näher im Detail dargestellt. Wie dort zu sehen ist, greift der Stift 11, der auch ein Bolzen sein kann, in die langlochförmigen Nuten 21, die sich auf dem daran angeordneten Getriebeteil, hier die Schnecke 20, befinden. Die Nuten könnten auch an anderen Stellen des Getriebeteils 20 oder wohlmöglich auch am Planetenträger (siehe "2" in der Fig. 1) vorgesehen sein. Bei AS sind die Nuten 21 bevorzugt auf der Schnecke 20 angebracht. Dies kann aber ebenso auf einem Zahnrad oder einer Riemenscheibe geschehen.

Die Aufgabe der Sperre 10 ist es, den unbestromten Motor 30 zu blockieren. Das bedeutet, dass die Sperre immer dann eingelegt ist, wenn das Fahrzeug ausgeschaltet ist, also die Zündung ausgeschaltet ist. Die hier vorgeschlagene Hilfskraftlenkung verfügt auch über eine Diagnoseschaltung 40, die die Funktion der Sperre 10 überprüft. Beim Einschalten der Zündung wird das AS-System hochgefahren und dabei die im folgenden beschriebene Diagnose durch geführt:

Zunächst wird bei geschlossener Sperre 10 am Elektromotor 30 ein Statorfeld in Richtung des Rotorfeldes eingestellt, also in Richtung der d-Achse des rotorfesten dq-Koordinatensystems (siehe Fig.2). Die Richtung des Rotors erhält man von einem Rotorlagesensor, der ein Resolver, d.h. ein induktiver Sensor, oder der ein magnetoresistiver Sensor sein kann. Der Betrag des Feldes wird durch Ausgabe von vordefinierten Spannungen an den Motorphasen so gewählt, dass das gewünschte Maximalmoment entsteht, wenn das Statorfeld senkrecht zum Rotorfeld (in q-Richtung) steht.

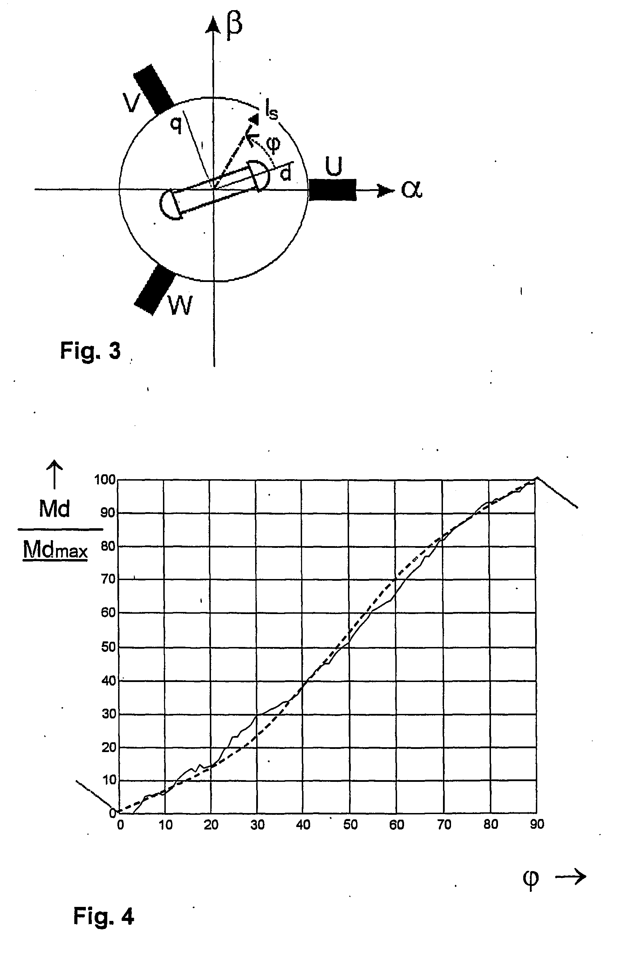

Da die beiden Felder zunächst aber parallel verlaufen wird kein Drehmoment erzeugt und der Motor bewegt sich nicht Dann wird das Statorfeld gegenüber dem Rotorfeld schrittweise verdreht, bis die beiden Felder schließlich senkrecht aufeinander stehen. Dabei erhöht sich auch das erzeugte Drehmoment an der Motorwelle von Null bis zum Maximalwert, der bei 90° erreicht wird (Fig. 4). Der Motor 30 darf sich dabei nicht bewegen, da er von der Sperre 10 blockiert wird. Gelegentlich kann es vorkommen, dass der Sperrstift 11 nicht vollständig in einer Nut 21 eingerastet war (vergl. Fig. 2). In solchen Fällen darf sich der Rotor höchstens um den Winkel zwischen zwei Nuten weiterbewegen. Bewegt sich der Rotor während des Momentenaufbaus um mehr als den Winkel zwischen zwei Nuten, so ist die Sperrwirkung der Sperre nicht gegeben und es liegt ein Sperrenfehler vor.

Die Fig. 3 zeigt das Statorfeld, das durch den Statorstrom Iₛ dargestellt wird und das sich von der Nullwinkellage (ϕ = 0) bis zur Neunzig-Grad-Lage (ϕ = 90°) weiterdreht. In der Fig. 4 ist das sich aufbauende Drehmoment Md angegeben bezogen auf das Maximalmoment Mdmax. Die gestrichelte Linie zeigt den idealen sinusförmigen Kurvenverlauf; die durchgezogene Linie den tatsächlich gemessenen Kurvenverlauf, der u.a. von der Bauteiletoleranz und Toleranzschwankungen des Winkellagesensors beenflusst wird.

Die Diagnoseschaltung 40 kann zusätzlich zur Funktionsüberprüfung der Sperre 10 auch noch die Funktion der Stromsensoren in den Stromzuleitungen des Motors sowie die Verbindung der Leitungen zwischen Endstufe und Motorwicklungen (Phasen U, V, W) abprüfen. Denn durch die Drehbewegung des Statorfeldes um 90° muss in jeder Phase zumindest zeitweise ein Strom fließen. Die Höhe dieser Ströme hängt neben den ausgegebenen Spannungen auch von der Qualität der Leitungen und Kontakte ab. Liefert ein Stromsensor während des ganzen Vorgangs den Wert Null oder einen anderen konstanten Wert, so ist der Sensor defekt oder die zugehörige Phase ist nicht angeschlossen.

Ob der Fehler im Sensor oder in der Phase liegt, kann dadurch unterschieden werden, dass im Fall einer nicht angeschlossenen Phase die beiden verbleibenden Phasen den gleichen Strom führen (mit unterschiedlichen Vorzeichen) und die zugehörigen Stromsensoren entsprechen den gleichen Wert liefern. Ist hingegen nur der Sensor defekt, so liefern die verbleibenden Stromsensoren betragsmäßig unterschiedliche Werte.

Das hier beschriebene Diagnose-Verfahren, bei dem das Drehmoment Md durch Verdrehen des Statorfeldes relativ zum Rotor (Läufer) aufgebaut wird, hat u.a. folgende Vorteile:

Es ermöglicht erst den Test der Stromsensoren und Motorphasen, da alle Phasen zeitweise mittels der Stromrichterschaltung, auch Leistungssteuerungseinheit PCU genannt, bestromt werden. Außerdem wird das Maximalmoment auch dann einmal während der Drehbewegung des Statorfeldes erreicht, wenn der vom Lagesensor gelieferte Wert falsch ist. Das hier vorgeschlagene Verfahren beruht also im wesentliche auf einer Phasendrehung des Statorfeldes.

Würde man alternativ dazu eine reine Amplitudensteigerung vornehmen, um das Drehmoment aufzubauen, dann würde man zunächst das Statorfeld senkrecht zum Rotor stellen (q-Richtung) und anschließend den Statorstrom nur betragsmäßig von Null zum Maximum erhöhen. Dabei gäbe es jedoch Rotorstellungen, bei denen eine Phase unbestromt bleibt. Ein Test dieser Motorphase und des zugehörigen Stromsensors wäre somit nicht möglich. Bei einem falschen Wert des Rotorlagewinkels würde sich zudem nicht das volle Motormoment ergeben.

Ist der Test der Sperre und der Strompfade erfolgreich verlaufen, so kann die Sperre geöffnet und der Motor für den Betrieb freigegeben werden. Jetzt kann die Diagnoseschaltung 40 auch noch die Funktion des Rotorlagesensors 31 überprüfen (siehe Fig. 2):

Legt man nun nochmals ein Feld in Richtung des Rotorfeldes (d-Richtung) an, so darf sich der nun frei drehbare Rotor nicht bewegen. Tut er dies doch, so war der vom Rotorlagesensor 31 gelieferte Wert falsch. Da der Motor 30 sich in eingebautem Zustand nur bei größeren Drehmomenten bewegt; muss der Fehler im Winkelsignal nicht unerheblich sein. Er kann etwa vierzig Grad (ca. 40°) oder mehr betragen. Der auftretende Fehler hängt im wesentlichen von der Reibung an der Motorwelle ab. Bei nur kleinen Fehlern (<10°) ist das erzeugte Drehmoment relativ klein und der Motor kann sich nicht bewegen. Solch kleine Fehlwinkel stellen aber kein grundsätzliches Problem dar, da der Motor in seiner gewohnten Weise funktioniert, nur der Wirkungsgrad wird schlechter. Bei großen Fehlwinkeln (ca. 90°) hingegen kann der Motor unkontrolliert loslaufen und es kann zu gefährlichen Fahrsituationen kommen, wenn der Fehler nicht rechtzeitig erkannt wird.

Am Ende eines Zündungszyklusses wird der Rotor so positioniert, dass der Sperrenstift in eine Nut einfällt. Die Positionen der Nuten sind aus der Startposition, die zu Beginn des Zündungszyklusses kurz vor dem Öffnen der Sperre gespeichert wird, und der bekannten Nutenteilung berechenbar. Es wird die jeweils nächstgelegene Nut angefahren. Ist diese Position erreicht, so kann die Sperre in idealer Weise geschlossen werden. Dieses von der Diagnoseschaltung und der Steuerschaltung durchgeführte Positionierungsverfahren bietet u.a den Vorteil, dass keine Geräusche, kein Klacken oder ähnliche akkustischen Störungen auftreten, da beim Sperrentest zu Beginn eines jeden Zündungszyklusses der Stift bereits optimal in der Nut sitzt.

Die beschriebene Diagnoseschaltung 40 kann als eigenständige Lösung angesehen werden, die jede beliebige Art von Sperren überprüfen kann. Die Diagnose erlaubt es, innerhalb kürzester Zeit (einige 10ms) den Zustand der Sperre, der Motorleitungen und Stromsensoren sowie des Rotorlagesensors zu erfassen. Sie erkennt gravierende Mängel dieser Komponenten, die die Sicherheit des Gesamtsystems negativ beeinflussen können, bereits vor dem Aktivbetrieb und kann somit wirkungsvoll zur Erhöhung der Sicherheit beitragen.

## Patentansprüche

1. Hilfskraftlenkung mit einem Elektromotor (30) und einem davon angesteuerten Überlagerungsgetriebe (12), das einem an der Lenkhandhabe eines Fahrzeugs vorgegebenen Lenkwinkel einen Korrekturwinkel überlagert, wobei der Rotor des Elektromotors (30) ein mechanisches Getriebeteil (20) des Überlagerungsgetriebes (12) bewegt und der Elektromotor (30) eine mechanische Sperre (10) aufweist, die zusätzlich zu einer elektrischen Deaktivierung des Elektromotors (30) und die zumindest bei störungsbehafteten Situationen das mechanische Getriebeteil (20) des Überlagerungsgetriebes (12) fixiert und gegen Bewegung sichert, wobei
das Getriebeteil (20) mit langlochförmigen Nuten (21) versehen ist; in die ein Stift (11) der mechanischen Sperre (10) eingreift **dadurch gekennzeichnet, dass** die Sperre (10) mit einer Diagnoseschaltung (40) verbunden ist, die den Elektromotor (30) und die Sperre (10) vor ihrer Entriegelung auf eine fehlerfreie Sperrfunktion hin überprüft.

2. Hilfskraftlenkung nach Anspruch 1, **dadurch gekennzeichnet, dass**
der Stift (11) federnd gelagert ist und eine spitz zulaufenden Form aufweist, die den Eingriff des Stiftes (11) in die Nuten (21) zumindest soweit sicherstellt, dass der Rotor des Elektromotors (30) auch bei Abgabe des maximalen Drehmomentes fixiert bleibt.

3. Hilfskraftlenkung nach Anspruch 1, **dadurch gekennzeichnet, dass**
das von der Sperre (10) fixierbare mechanische Getriebeteil eines (20) der beiden Eingangsgetriebeglieder (20, 1) des Überlagerungsgetriebes (12), insbesondere eine Schnecke (20), ein Schneckenrad, eine Schraube oder ein Schraubrad, ist.

4. Hilfskraftlenkung nach Anspruch 1, **dadurch gekennzeichnet, dass** die Diagnoseschaltung (40) mit Stromsensoren verbunden ist, die die Stromzufuhr des Stators des Elektromotors (30) messen, und dass die Diagnoseschaltung (40) prüft, ob bei einem anwachsenden Drehmoment (Md) die Stromsensoren Strommesswerte anzeigen, die ungleich Null sind oder sich zumindest während der Diagnosedauer ändern.

5. Hilfskraftlenkung nach Anspruch 1, **dadurch gekennzeichnet, dass**
die Diagnoseschaltung (40) das Bestromen der Statorwicklungen (u, v, w) des Elektromotors (30) überwacht und eine schrittweise Drehung des Statorfeldes gegenüber dem Rotorfeld steuert, so dass das vom Elektromotor (30) aufgebrachte Drehmoment (Md) vom Wert Null bis zu seinem Maximalwert (Mdmax) ansteigt.

6. Hilfskraftlenkung nach Anspruch 1, **dadurch gekennzeichnet, dass** die Diagnoseschaltung (40) mit einem Rotorlagesensor (31) verbunden ist, der die Winkellage des Rotors misst, und dass die Diagnoseschaltung (40) prüft, ob bei einem anwachsenden Drehmoment (Md) der Rotor des Elektromotors (30) im Stillstand verharrt.

7. Hilfskraftlenkung nach Anspruch 6, **dadurch gekennzeichnet, dass** der Rotorlagesensor ein induktiver Sensor oder ein magnetoresistiver Sensor (40) ist.

8. Hilfskraftlenkung nach Anspruch 5, **dadurch gekennzeichnet, dass** die Diagnoseschaltung (40) auch die Funktion des Rotorlagesensors (31) prüft, indem die Diagnoseschaltung (40) bei mechanisch entsperrtem Rotor ein Statorfeld erzeugt, das in Richtung des Rotors ausgerichtet ist, und indem die Diagnoseschaltung (40) dann überwacht, ob der Rotor sich bewegt oder nicht.

9. Hilfskraftlenkung nach Anspruch 5 , **dadurch gekennzeichnet, dass** die Diagnoseschaltung (40) zu Beginn des Zündungszyklusses und vor der Entriegelung der Sperre die vom Rotorlagesensor (31) gemessene Winkellage speichert und die Steuerschaltung (ECU) die Bestromung des Elektromotors (30) steuert, um den Rotor mittels der gespeicherten Winkellage und der bekannten Nutenteilung optimal auf die Position des Sperrenstiftes ausrichtet

## Claims

1. Power-assisted steering with an electric motor (30) and a superimposing gear mechanism (12), which is actuated thereby and superimposes a correction angle on the steering angle specified at the steering handling device of a vehicle, the rotor of the electric motor (30) moving a mechanical transmission part (20) of the superimposing gear mechanism (12) and the electric motor (30) having a mechanical lock (10), which, in addition to an electrical deactivation of the electric motor (30), immobilizes the mechanical transmission part (20) of the superimposing gear mechanism (12) at least in situations affected by a malfunction and secures it to prevent movement, the transmission part (20) being provided with elongated hole-shaped grooves (21), which are engaged by a pin (11) of the mechanical lock (10), **characterized in that** the lock (10) is connected with a diagnostic circuit (40), which checks the electric motor (30) and the lock (10) for a defect-free locking function before the lock (10) is unlocked.

2. Power-assisted steering according to Claim 1, **characterized in that** the pin (11) is mounted elastically and has a shape, which runs out to a point and ensures that the pin (11) engages the grooves (21) at least to such an extent, that the rotor of the electric motor (30) remains immobilized even when the maximum torque is delivered.

3. Power-assisted steering according to Claim 1, **characterized in that** the mechanical part of the transmission of one (20) of the two input transmission elements (20, 1) of the superimposing gear mechanism (12), immobilizable by the lock (10), is, in particular, a worm (20), a worm gear, a screw or a screw gear.

4. Power-assisted steering according to Claim 1, **characterized in that** the diagnostic circuit (40) is connected with current sensors, which measure the current supplied to the stator of the electric motor (30), and that the diagnostic circuit (40) checks whether, when the torque (Md) is increasing, the current sensors indicate current values, which are not equal to zero or, at least, change during the duration of the diagnosis.

5. Power-assisted steering according to Claim 1, **characterized in that** the diagnostic circuit (40) monitors the supplying of the stator coils (u, v, w) of the electric motor (30) with power and controls a stepwise rotation of the stator field with respect to the rotor field, so that the torque (Md), applied by the electric motor (30), increases from a value of zero up to a maximum value (Mdmax).

6. Power-assisted steering according to Claim 1, **characterized in that** the diagnostic circuit (40) is connected with a rotor position sensor (31), which measures the angular position of the rotor, and that the diagnostic circuit (40) checks whether the rotor of the electric motor (30) remains stationary when the torque (Md) is increasing.

7. Power-assisted steering according to Claim 6, **characterized in that** the rotor position sensor is an inductive sensor or a magnetoresistive sensor (40).

8. Power-assisted steering according to Claim 5, **characterized in that** the diagnostic circuit (40) also checks the function of the rotor position sensor (31), **in that** the diagnostic circuit (40), when the rotor is unlocked mechanically, generates a stator field, which is aligned in the direction of the rotor, and **in that** the diagnostic circuit (40) then monitors whether or not the rotor is moving.

9. Power-assisted steering according to Claim 5, **characterized in that** the diagnostic circuit (40), at the start of the ignition cycle and before the lock is unlocked, stores the angular position measured by the rotor position sensor (31) and the control circuit (ECU) controls the electricity supplied to the electric motor (30), in order to align the rotor by means of the stored angular position and the known groove spacing optimally onto the position of the locking pin.

## Revendications

1. Direction assistée comprenant un moteur électrique (30) et un engrenage de superposition (12) qui superpose un angle de correction à un angle de direction prédéfini sur la manette de changement de direction d'un véhicule, le rotor du moteur électrique (30) déplaçant une partie mécanique d'engrenage (20) de l'engrenage de superposition (12) et le moteur électrique (30) présentant un dispositif de blocage mécanique (10) qui, en plus d'une désactivation électrique du moteur électrique (30), bloque la partie mécanique d'engrenage (20) de l'engrenage de superposition (12) et l'empêche d'exécuter tout mouvement au moins en présence de situations de défaut, la partie d'engrenage (20) étant munie de rainures (21) en forme de trous oblongs dans lesquelles vient en prise une broche (11) du dispositif de blocage mécanique (10), **caractérisée en ce que** le dispositif de blocage mécanique (10) est relié avec un circuit de diagnostic (40) qui contrôle l'absence de défaut de la fonction de blocage du moteur électrique (30) et du dispositif de blocage (10) avant leur déverrouillage.

2. Direction assistée selon la revendication 1, **caractérisée en ce que** la broche (11) est montée sur un ressort et présente une forme se terminant en pointe qui garantit la pénétration de la broche (11) dans les rainures (21) au moins suffisamment loin pour que le rotor du moteur électrique (30) reste bloqué même en cas de délivrance du couple maximum.

3. Direction assistée selon la revendication 1, **caractérisée en ce que** la partie mécanique d'engrenage pouvant être bloquée par le dispositif de blocage (10) est l'un (20) des deux éléments d'engrenage d'entrée (20, 1) de l'engrenage de superposition (12), notamment une vis sans fin (20), une roue hélicoïdale, une vis ou une roue à dents hélicoïdales.

4. Direction assistée selon la revendication 1, **caractérisée en ce que** le circuit de diagnostic (40) est relié à des détecteurs de courant qui mesurent l'arrivée du courant du stator du moteur électrique (30) et que le circuit de diagnostic (40) vérifie si, en présence d'un accroissement du couple (Md), les détecteurs de courant indiquent des valeurs mesurées du courant qui sont différentes de zéro ou qui varient au moins pendant la durée du diagnostic.

5. Direction assistée selon la revendication 1, **caractérisée en ce que** le circuit de diagnostic (40) surveille l'alimentation électrique des enroulements du stator (u, v, w) du moteur électrique (30) et commande une rotation pas à pas du champ du stator par rapport au champ du rotor de sorte que le couple (Md) appliqué par le moteur électrique (30) augmente de la valeur zéro à sa valeur maximale (Mdmax).

6. Direction assistée selon la revendication 1, **caractérisée en ce que** le circuit de diagnostic (40) est relié à un détecteur de position du rotor (31) qui mesure la position angulaire du rotor et que le circuit de diagnostic (40) vérifie si, en présence d'un accroissement du couple (Md), le rotor du moteur électrique (30) reste immobilisé.

7. Direction assistée selon la revendication 6, **caractérisée en ce que** le détecteur de position du rotor est un capteur inductif ou un capteur magnétorésistif (40).

8. Direction assistée selon la revendication 5, **caractérisée en ce que** le circuit de diagnostic (40) contrôle également le fonctionnement du détecteur de position du rotor (31) **en ce que** le circuit de diagnostic (40), lorsque le rotor est débloqué mécaniquement, génère un champ de stator qui est dirigé en direction du rotor et **en ce que** le circuit de diagnostic (40) vérifie si le rotor se déplace ou non.

9. Direction assistée selon la revendication 5, **caractérisée en ce que** le circuit de diagnostic (40), au début du cycle d'allumage et avant le déverrouillage du dispositif de blocage, enregistre la position angulaire mesurée par le détecteur de position du rotor (31) et le circuit de commande (ECU) commande l'alimentation électrique du moteur électrique (30) afin d'aligner le rotor de manière optimale sur la position de la broche de blocage au moyen de la position angulaire enregistrée et de la distribution connue des rainures.
